## Europäisches Patentamt
## European Patent Office
## Office européen des brevets

(11) Veröffentlichungsnummer : **0 133 662**
**B1**

(12) **EUROPÄISCHE PATENTSCHRIFT**

(12)

(45) Veröffentlichungstag der Patentschrift :
25.05.88

(21) Anmeldenummer : 84108653.1

(22) Anmeldetag : 21.07.84

(51) Int. Cl.⁴ : **A 47 B 77/02, B 27 M 3/18**

(54) Verbundplatte und Verfahren zu deren Herstellung.

(30) Priorität : 13.08.83 DE 3329372
03.09.83 DE 3331842

(43) Veröffentlichungstag der Anmeldung :
06.03.85 Patentblatt 85/10

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
DE-A- 2 118 760
DE-A- 2 357 051
DE-A- 3 037 233
DE-A- 3 131 820
DE-U- 7 516 820
FR-A- 2 192 895

(73) Patentinhaber : **DUROPAL-Werk Eberh. Wrede GmbH
& Co. KG
Industriegelände Bruchhausen
D-5760 Arnsberg 1 (DE)**

(72) Erfinder : **Tuneke, Wilhelm
Auf den Höhen 12
D-4763 Ense-Hoingen (DE)**
Erfinder : **Weber, Jürgen
Litauenring 107
D-5760 Arnsberg 1 (DE)**

(74) Vertreter : **von Rohr, Hans Wilhelm, Dipl.-Phys. et al
Patentanwälte Gesthuysen & von Rohr Huyssenallee
15 Postfach 10 13 33
D-4300 Essen 1 (DE)**

## Beschreibung

Die Erfindung betrifft eine Verbundplatte, mit einer Kernplatte mit einem von der Oberseite der Kernplatte zum Rand übergehenden abgerundeten Wulst, der von einem Randteil gebildet ist, mit einer auf die Oberseite der Kernplatte, den Wulst und den Rand aufgeleimten Dekorplatte und gegebenenfalls mit einer auf die Unterseite der Kernplatte aufgeleimten Schutzfolie, wobei zwischen der Kernplatte und dem Randteil eine keilförmige, mit einer dauerhaften Füllung ausgefüllte Nut vorgesehen ist, die sich im wesentlichen schräg von unten bis in den Bereich der Dekorplatte erstreckt und so angeordnet und ausgebildet ist, daß der Randteil durch die Keilform der Nut zu dem Wulst angehoben ist.

Eine Verbundplatte weist generell eine Kernplatte auf, bei der es sich zumeist um eine Spanplatte handelt. Grundsätzlich sind als Kernplatten aber auch Naturholzplatten oder Platten aus anderen Materialien, beispielsweise Kunststoff, geeignet. Auf die Oberseite einer solchen Kernplatte ist eine Dekorplatte aufgeleimt, bei der es sich üblicherweise um eine Hochdruck-Schichtstoffplatte (HPL-Platte, DIN 16926) handelt. Auch andere Dekorplatten, beispielsweise aus duroplastischem oder thermoplastischem Material sind für unterschiedliche Anwendungsfälle bekannt. Jedenfalls sollte die aufgeleimte Dekorplatte wasser- und hitzebeständig sein, wozu sich eben Hochdruck-Schichtstoffplatten besonders gut eignen. Eine auf der Unterseite der Kernplatte aufgeleimte Schutzfolie, bei der es sich um eine Kunstharzfolie handeln kann, dient dem Schutz der Kernplatte gegen Feuchtigkeit und Hitzeeinwirkungen. Auch eine solche Schutzfolie sollte also wasser- und hitzebeständig sein. Unter Umständen ist anstelle einer Schutzfolie auch auf der Unterseite der Kernplatte eine Dekorplatte, vorzugsweise eine Hochdruck-Schichtstoffplatte, vorgesehen.

Verbundplatten der in Rede stehenden Art sind seit sehr langer Zeit bekannt. Zunehmend finden auch bei solchen Verbundplatten abgerundete Ränder Interesse, einerseits aus ergonomischen Gesichtspunkten und Gesichtspunkten der Verletzungsgefahr, andererseits aus optischen Gesichtspunkten (Softline-Dekor). Bei manchen Verbundplatten, insbesondere solchen, die als Arbeitsplatten in Küchen und Labors sowie als Abdeckplatten und Fensterbänke Verwendung finden, ist ein Randwulst an zumindest einem Rand erwünscht. Ein solcher Randwulst soll betriebsmäßig in gewissem Umfange Flüssigkeiten auf der Verbundplatte daran hindern, über den Rand herab zu laufen. Die Erfindung betrifft eine solche Verbundplatte mit Randwulst sowie ein Verfahren zur Herstellung einer solchen Verbundplatte. Ziel bekannter Verfahren der in Rede stehenden Art ist es, einen Randwulst herstellungstechnisch möglichst zweckmäßig und optisch möglichst unauffällig an einer solchen Verbundplatte auszubilden.

Bei einer bekannten Verbundplatte mit Randwulst (vgl. die US-A-2 648 370) ist ein von der Kernplatte getrenntes, gesondertes Randteil vorgesehen, an dem der Randwulst ausgebildet und der mit der Kernplatte verleimt ist. Die schon zuvor mit der Oberseite der Kernplatte verleimte und über den Rand der Kernplatte um ein entsprechendes Stück vorstehende Dekorplatte muß um diesen separaten Randteil herumgebogen und mit ihm verleimt werden. Das ist insbesondere im Bereich des Überganges von der Kernplatte auf den Randteil sehr schwierig, so daß häufig hier Herstellungsfehler auftreten. Außerdem ist die Unterseite der Kernplatte und des Randteiles nur sehr schwierig durchgehend mit einer Schutzfolie verleimbar. Schließlich birgt die Verwendung zweier unterschiedlicher Teile — Kernplatte und Randteil — ein nicht zu vernachlässigendes Toleranzproblem, denn diese beiden Teile sind bei den überlicherweise verwendeten Materialien nur sehr schwer paßgenau zu fertigen. Tatsächlich hat es bei dieser Verbundplatte immer wieder Verwerfungen der Dekorplatte gegeben, insbesondere im Bereich des Überganges von der Kernplatte auf das Randteil. Zumindest ist dieser Übergang fast immer im Gegenlicht als Knick oder Stufe erkennbar. Eine ähnliche bekannte Verbundplatte (vgl. die US-PS 2 542 860) weist ähnliche Schwierigkeiten in Herstellung und Anwendung auf.

Eine andere Verbundplatte mit Randwulst sowie ein Verfahren zu deren Herstellung sind gleichfalls bekannt (vgl. die DE-A-31 31 820). Von diesem Stand der Technik geht die Erfindung aus. Bei dieser Verbundplatte ist der Randteil aus der Kernplatte selbst geformt. Die Formgebung dieses Randteiles ist eine solche, daß nach dem Wegbiegen des Randteiles von der verbleibenden Kernplatte auf der Oberseite der Kernplatte am Rand der gewünschte Randwulst entsteht. Hier wird die zugeschnittene und am Rand bearbeitete Kernplatte vollflächig mit der Dekorplatte verleimt, d. h. die Dekorplatte wird auf die Oberseite der Kernplatte aufgeleimt und gleichzeitig um den Rand herum gebogen und auch mit dem Randteil bis zur Unterkante dieses Randteiles verleimt. Die Nut wird von der Unterseite der Kernplatte direkt neben der Unterkante des Randteiles beginnend schräg nach innen und oben zur Oberseite der Kernplatte hin geführt. Um die Dekorplatte nicht zu beschädigen, wird die Tiefe der Nut so bemessen, daß noch ein wenig Material der Kernplatte zwischen dem Ende der Nut und der Dekorplatte auf der Oberseite der Kernplatte verbleibt. Danach wird die Nut keilförmig aufgeweitet, wodurch der Randteil nach oben weggebogen wird, was zur Ausbildung des Randwulstes führt. Die Verleimung der Dekorplatte mit der Kernplatte und dem Randteil ist hier optimal möglich und Toleranzprobleme wegen der Verwendung zweier verschiedener Teile existieren nicht, da ja der Randteil aus der Kernplatte selbst entstanden und schon vor der Ausbildung des Randwulstes vollflächig mit der Dekorplatte verleimt ist.

Bei der voranstehend erläuterten Verbundplatte wandert beim Wegbiegen des Randteiles die Unterkante des Randteiles auf einem Kreisbogen schräg nach oben. Die Füllung der Nut ist von unten und von der Seite her sichtbar. Um kein Wasser um den Randteil herum nach innen auf die Unterseite der Kernplatte bzw. die Schutzfolie laufen zu lassen, weist die Füllung eine von der Seite sichtbare Wasserabtropfnut auf. Insgesamt ist also diese Verbundplatte optisch, insbesondere bei Ansicht von der Seite bzw. schräg nach unten nicht optimal gestaltet.

Im übrigen bilden sich im Bereich des Überganges von der Kernplatte auf den Randteil wegen des dort stehenbleibenden dünnen Restes des Materials der Kernplatte mitunter Verwerfungen, die zumindest im Gegenlicht auf der Dekorplatte erkennbar sind.

Im übrigen ist auch eine Verbundplatte mit einer Kernplatte mit abgerundetem Rand und einer auf die Oberseite der Kernplatte und den Rand aufgeleimten Dekorplatte bekannt (vgl. die eingetragenen Unterlagen des DE-U-73 04 666, die DE-B-20 47 213, die DE-A-21 29 828), bei der eine Nut im wesentlichen horizontal vom Rand der Kernplatte aus in diese eingeschnitten und mit einer Füllung ausgefüllt ist. Diese Verbundplatte weist jedoch keinen von der Oberseite der Kernplatte zum Rand übergehenden abgerundeten Wulst auf, wie das bei der Verbundplatte, von der die Erfindung ausgeht, der Fall ist. Deshalb besteht bei dieser bekannten Verbundplatte auch ein gänzlich anderer Problemhintergrund als bei der eingangs erläuterten, bekannten Verbundplatte, von der die Erfindung ausgeht.

Ausgehend von dem zuvor erläuterten Stand der Technik liegt der Erfindung die Aufgabe zugrunde, anzugeben, wie eine optisch und anwendungstechnisch optimale Verbundplatte konstruiert sein kann und wie eine solche Verbundplatte herstellbar ist.

Die erfindungsgemäße Verbundplatte, bei der die zuvor aufgezeigte Aufgabe gelöst ist, ist dadurch gekennzeichnet, daß die Nut im unteren Bereich vom Rand der Kernplatte, vorzugsweise von der unteren Hälfte des Randes der Kernplatte ausgeht und daß die Füllung hier von der auf den Rand der Kernplatte aufgeleimten Dekorplatte überdeckt ist. Bei der erfindungsgemäßen Verbundplatte reicht also die Dekorplatte ohne weiteres bis zur Unterkante der Kernplatte hinunter, so daß von der Seite eine optimale Optik gegeben ist. Die Nut mit der Füllung wird völlig von der Dekorplatte abgedeckt. Die Unterkante der Dekorplatte führt ohne weitere Maßnahmen dazu, daß dorthin laufende Wassertropfen nach unten abtropfen und nicht auf die Unterseite der Kernplatte gelangen. Die Unterseite der Kernplatte kann daher bis zum Rand hin schon vorher vollflächig mit einer Schutzfolie od. dgl. abgedeckt werden, da die Nut nicht von der Unterseite in die Kernplatte eingeschnitten worden ist.

Zweckmäßigerweise weist bei der erfindungsgemäßen Kernplatte die Nut im Bereich der Oberseite der Kernplatte einen an der Oberseite der Kernplatte offenen Abschnitt auf, der vorzugsweise im wesentlichen senkrecht zur Oberseite der Kernplatte verläuft. Dadurch ist gewissermaßen eine vom Rand der Kernplatte bis zur Unterseite der Dekorplatte hinaufreichende, durchgehende Nut verwirklicht, was insbesondere der optischen Qualität der Dekorplatte im Bereich des Überganges von der Kernplatte auf den Randteil zugute kommt.

Insbesondere dann, wenn der zuvor erläuterte Abschnitt der Nut in einem Winkel zum Rest der Nut verläuft, empfiehlt es sich, die Füllung zu einem Teil aus einem plastischen, aushärtbaren Füllmaterial und zu einem anderen Teil aus einem festen Füllstück bestehen zu lassen.

In verfahrensmäßiger Hinsicht wird, wie eingangs erläutert worden ist, für die Erfindung ein Verfahren als bekannt vorausgesetzt, bei dem die Kernplatte zugeschnitten und der Übergangsbereich zumindest eines Randes der Kernplatte zu ihrer Oberseite abgerundet und der Rand von der Oberseite weg nach innen abgeschrägt wird, die Dekorplatte auf die Oberseite der Kernplatte aufgeleimt wird, nahe dem abgerundeten und abgeschrägten Rand die Nut in die Kernplatte bis in den Bereich der Dekorplatte eingeschnitten und dadurch der Randteil der Kernplatte ausgebildet wird, der Randteil von der Kernplatte unter keilförmigem Aufweiten der Nut zu dem Wulst weggebogen wird und die aufgeweitete Nut mit der dauerhaften Füllung ausgefüllt wird. In verfahrensmäßiger Hinsicht ist die Lehre der Erfindung dann dadurch gekennzeichnet, daß das Einschneiden der Nut vom Rand, vorzugsweise von der unteren Hälfte des Randes der Kernplatte, ausgehend erfolgt und daß das Verleimen der Dekorplatte über den Wulst und den Rand erst nach dem Ausfüllen der Nut vorgenommen wird. Erfindungsgemäß wird also die Dekorplatte zunächst tatsächlich nur auf die Oberseite der Kernplatte aufgeleimt, so daß sie zunächst über den Rand der Kernplatte um ein gewisses Stück frei übersteht. Von dem bearbeiteten Rand der Kernplatte ausgehend wird dann die Nut schräg nach oben in die Kernplatte eingeschnitten, aufgeweitet und mit der Füllung ausgefüllt. Erst wenn diese Füllung ausgehärtet ist und sich so, evtl. nach leichtem Nacharbeiten des Randteiles, des Mündungsteiles der Füllung und des verbliebenen Randes der Kernplatte, eine glatte Oberfläche des Randteiles, der Füllung und des verbliebenen Randes der Kernplatte darbietet, wird das überstehende Stück der Dekorplatte der Form des Randes entsprechend verformt und aufgeleimt.

In verfahrensmäßiger Hinsicht empfiehlt sich eine weitere Lehre, die dadurch gekennzeichnet ist, daß das Abrunden und Abschrägen des Randes nur über etwa 60 % bis 95 %, insbesondere über 80 %, der Dicke der Kernplatte vorgenommen wird, so daß im Bereich der Unterseite der Kernplatte eine über den bearbeiteten Teil des Randes vorspringende Leiste verbleibt und daß der Ausgangsbereich für das Einschneiden der Nut über der Leiste vorgesehen wird. Durch die Bearbeitung wird die seitlich-äußere Begrenzungslinie des Randes der Kernplatte zweckmäßigerweise ein wenig zurückverlegt gegenüber dem Rand der Kernplatte vor der Bearbeitung bzw. gegenüber der Vorderkante der vorspringenden Leiste. Dadurch kann gewährleistet werden, daß auch nach dem Aufweiten der Nut die Leiste noch ein wenig über den Rand vorspringt, was für nachfolgende Verfahrensschritte vorteilhaft ist. Die vorspringende Leiste an der Unterseite der Kernplatte hat überdies den erheblichen Vorteil, daß auf der Unterseite der Kernplatte schon zu diesem Zeitpunkt die Schutzfolie vollflächig aufgeleimt werden kann.

Was die Füllung der Nut betrifft, so kommen hier eine Vielzahl von Materialien in Frage. Bei dem bekannten Verfahren, von dem die Lehre der Erfindung ausgeht, wird zur Füllung der Nut ein festes, vorzugsweise aus dem Material der Kernplatte bestehendes Füllstück verwendet. Ist das auch bei dem erfindungsgemäßen Verfahren der Fall, so ist eine besonders vorteilhafte Ausführungsform des erfindungsgemäßen Verfahrens dadurch gekennzeichnet, daß das Füllstück nach dem dauerhaften Einsetzen in die Nut zunächst aus der Nut herausragt und daß vor dem Aufleimen der Dekorplatte der überstehende Teil des Füllstückes, ggf. gemeinsam mit dem noch überstehenden Teil der vorspringenden Leiste, an die Kontur des Randteiles, vorzugsweise durch Beifräsen, angepaßt wird. Mit diesem Verfahren läßt sich eine besonders glatte und gleichmäßige Außenkontur des Randes erreichen, so daß sich die Dekorplatte technisch optimal aufleimen läßt und im Ergebnis optisch ein optimales Ergebnis erzielt wird. Diese Nachbearbeitung ist, wie zuvor schon an anderer Stelle erläutert worden ist, grundsätzlich bei allen Arten von Füllungen möglich, wenngleich bei Füllungen aus einem plastischen, an der Luft aushärtenden Füllmaterial od. dgl. weniger günstig anwendbar. Auch ist der Bearbeitungsvorgang nicht unbedingt auf ein Fräsen beschränkt, auch andere zweckmäßige Bearbeitungsvorgänge können hier vorgenommen werden.

Sofern die zuvor erläuterte vorspringende Leiste an der Kernplatte vorgesehen ist, wird auch ein noch überstehender Teil dieser Leiste gemeinsam mit dem überstehenden Teil des Füllstückes mit beigefräst od. dgl.

Die Füllung kann, wie zuvor erläutert worden ist, aus unterschiedlichen Materialien bestehen. Es kann sich auch um eine zusammengesetzte Füllung handeln, bei der zunächst ein plastisches, aushärtbares Füllmaterial für den « hinteren » Teil der Nut und anschließend ein festes Füllstück für den « vorderen » Teil der Nut verwendet wird. Als plastisches, aushärtbares Füllmaterial kommt dabei bei einer Spanplatte als Kernplatte besonders eine Holzspan/Kunstharz-Mischung in Frage, während als Füllstück zweckmäßigerweise ein passend konturiertes Holzstück verwendet wird.

Die letztgenannte Ausgestaltung des erfindungsgemäßen Verfahrens ist besonders zweckmäßig, wenn das Einschneiden des vorzugsweise im wesentlichen senkrecht zur Oberseite der Kernplatte verlaufenden Abschnitts der Nut von der Oberseite der Kernplatte aus vor dem Aufleimen der Dekorplatte vorgenommen wird. Dann kann nämlich das plastische, aushärtbare Füllmaterial die Nut bis zur Unterseite der Dekorplatte hinauf und den « hinteren » Teil der Nut füllen, was insbesondere dann von Bedeutung ist, wenn die Nut winkelig verläuft, wie das zumeist der Fall ist, wenn der Abschnitt im wesentlichen senkrecht zur Oberseite der Kernplatte eingeschnitten wird.

Die zuvor erläuterte Einbringung des Abschnittes der Nut von der Oberseite der Kernplatte aus vor dem Aufleimen der Dekorplatte hat den Vorteil, daß beim folgenden Einschneiden der Nut kein Rest von Material der Kernplatte stehen bleiben muß. Ohne daß die Dekorplatte der Gefahr einer Beschädigung ausgesetzt wäre, kann eine bis zur Unterseite der Dekorplatte hinaufreichende Nut verwirklicht werden. Das kommt insbesondere der optischen Qualität der Dekorplatte im Bereich des Überganges von der Kernplatte auf den Randteil zugute.

Wie sich aus den voranstehenden Erläuterungen ergibt, muß bei dem erfindungsgemäßen Verfahren die Dekorplatte nach Aufweiten der Nut und Schaffen des Randwulstes noch verformt und am Rand aufgeleimt werden. Es hat sich gezeigt, daß bei Dekorplatten üblicher Art, also insbesondere Hochdruck-Schichtstoffplatten, eine Erwärmung auf eine Temperatur von etwa 150 °C-180 °C zweckmäßig ist.

Bei Durchführung des erfindungsgemäßen Verfahrens kann die Schutzfolie auf die Unterseite der Kernplatte praktisch jederzeit aufgeleimt werden, da von Anfang an ein vollflächiges Aufleimen der Schutzfolie möglich ist. Von besonderem Vorteil hinsichtlich des Verfahrensablaufes ist es aber, wenn die Schutzfolie gleichzeitig mit dem Aufleimen der Dekorplatte auf die Oberseite der Kernplatte auf deren Unterseite aufgeleimt wird.

Im folgenden wird die Erfindung anhand einer lediglich ein Ausführungsbeispiel darstellenden Zeichnung näher erläutert ; es zeigt

Fig. 1 im Schnitt ein Ausführungsbeispiel einer erfindungsgemäßen Verbundplatte in einer ersten Stufe der Herstellung,

Fig. 2 die in Fig. 1 dargestellte Verbundplatte in einer zweiten Stufe der Herstellung,

Fig. 3 die in Fig. 1 dargestellte Verbundplatte in einer dritten Stufe der Herstellung,

Fig. 4 die in Fig. 1 dargestellte Verbundplatte in einer vierten Stufe der Herstellung und

Fig. 5 die in Fig. 1 dargestellte Verbundplatte in einer fünften Stufe der Herstellung, d. h. nach Abschluß des Verfahrens zur Herstellung dieser Verbundplatte.

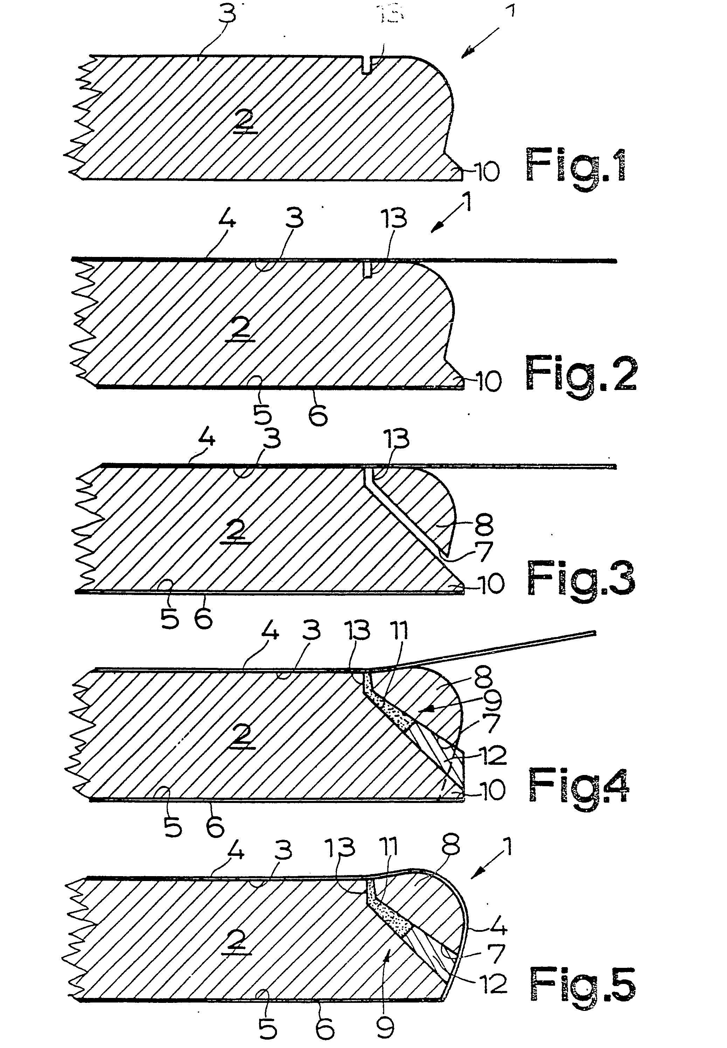

Fig. 5 zeigt eine Verbundplatte 1 im Schnitt, die aus einer Kernplatte 2, einer auf die Oberseite 3 der Kernplatte 2 aufgeleimten Dekorplatte 4 und einer auf die Unterseite 5 der Kernplatte 2 aufgeleimten Schutzfolie 6 besteht. Diese Verbundplatte 1 zeichnet sich dadurch aus, daß sie in optischer und anwendungstechnischer Hinsicht optimal ist. Insbesondere ist bei dieser Verbundplatte 1 das Problem des Rücklaufens von Wassertropfen auf die Unterseite 5 der Kernplatte 2 äußerst elegant, indem die Dekorplatte 4 selbst eine Wasserabtropfkante bildet.

In einem ersten Verfahrensschritt, dessen Ende in Fig. 1 dargestellt ist, wird die Kernplatte 2 der erfindungsgemäßen Verbundplatte 1 zugeschnitten und ein Rand der Kernplatte 2 auf der Oberseite 3 wird abgerundet und von der Oberseite 3 weg profiliert. Dann wird der Abschnitt 13 der Nut 7 eingefräst. Fig. 2 zeigt, daß in einem zweiten Verfahrensschritt die Dekorplatte 4 auf die Oberseite 3 und gleichzeitig die Schutzfolie 6 auf die Unterseite 5 der Kernplatte 2 aufgeleimt werden. Die Dekorplatte steht über den Rand der Kernplatte 2 ein erhebliches Stück vor.

Nahe dem abgerundeten Rand der Kernplatte 2 wird, wie Fig. 3 zeigt, eine Nut 7 in die Kernplatte 2 bis in den Abschnitt 13 nach dem ersten Verfahrensschritt eingeschnitten und dadurch ein Randteil 8 der Kernplatte 2 ausgebildet. Der Randteil 8 wird, wie Fig. 4 zeigt, von der Kernplatte 2 unter keilförmigem Aufweiten der Nut 7 weggebogen. Die aufgeweitete Nut 7 wird mit einer dauerhaften Füllung 9 ausgefüllt.

Fig. 5 zeigt, daß die Dekorplatte 4 erst nach dem Ausfüllen der Nut 7 mit dem Randteil 8, der die Nut 7 ausfüllenden Füllung 9 und dem verbliebenen Rand der Kernplatte 2 verleimt wird.

Fig. 2 läßt erkennen, daß bei der Herstellung des dargestellten Ausführungsbeispieles einer erfindungsgemäßen Verbundplatte 1 zunächst der Rand nur über einen Teil, nämlich über 80 %, der Dicke der Kernplatte 2 bearbeitet — abgerundet — wird, so daß an der Unterseite 5 der Kernplatte 2 eine über den bearbeiteten Rand vorspringende Leiste 10 verbleibt. Fig. 3 läßt in diesem Zusammenhang erkennen, daß die Nut 7 unmittelbar über der Leiste 10 beginnend in die Kernplatte 2 eingeschnitten wird.

Fig. 4 macht deutlich, daß zur Fullung der Nut 7 zunächst, nämlich für den « hinteren » Teil der Nut 7, ein plastisches, aushärtbares Füllmaterial 11 und anschließend, nämlich für den « vorderen » Teil der Nut 7, ein festes Füllstuck 12 verwendet wird. Das feste Füllstück 12 besteht im dargestellten Ausführungsbeispiel aus demselben Material wie die Kernplatte 2.

Wie Fig. 4 deutlich zeigt, ragt das Füllstück 12 nach dem dauerhaften Einsetzen in die Nut 7 zunächst aus der Nut 7 heraus. In Fig. 4 ist durch eine gestrichelte Linie angedeutet, daß vor dem Aufleimen der Dekorplatte 4 der überstehende Teil des Füllstückes 12 gemeinsam mit dem noch überstehenden Teil der vorspringenden Leiste 10 an die Kontur des Randteiles 8 angepaßt wird. Das geschieht durch Beifräsen. Die Dekorplatte 4 kann nun auf den ganz gleichmäßig mit absolut glatter Oberfläche konturierten Rand der Kernplatte 2 aufgeleimt werden, wie das Fig. 5 deutlich erkennen läßt.

In den Fig. 1 bis 5 ist insoweit ein besonders bevorzugtes Ausführungsbeispiel einer erfindungsgemäßen Verbundplatte 1 im Herstellungsverfahren gezeigt, als bei dieser Verbundplatte 1 der Abschnitt 13 der Nut 7 vor dem Aufleimen der Dekorplatte 4 auf die Oberseite 3 der Kernplatte 2 von der Oberseite 3 her eingeschnitten wird. Die nach dem Aufleimen der Dekorplatte 4 auf die Oberseite 3 der Kernplatte 2 eingeschnittene Nut 7 mündet, wie Fig. 3 erkennen läßt, in den Abschnitt 13. Der Abschnitt 13 verläuft senkrecht zur Oberseite 3 der Kernplatte 2 und bildet mit dem Rest der Nut 7 einen stumpfen Winkel. Aus diesem Grunde ist auch die Verwendung plastischen, aushärtbaren Füllmaterials 11 im « hinteren » Teil der Nut 7 besonders zweckmäßig, da es von der Nut 7 in den Abschnitt 13 auch um die Ecke hineingedrückt werden kann.

Die Verformung und Verleimung der Dekorplatte 4 mit dem Randteil 8 etc., Übergang von Fig. 4 auf Fig. 5, erfolgt bei einer Temperatur der Dekorplatte 4 von 150 °C bis 180 °C.

**Patentansprüche**

1. Verbundplatte, mit einer Kernplatte mit einem von der Oberseite der Kernplatte zum Rand übergehenden abgerundeten Wulst, der von einem Randteil gebildet ist, mit einer auf die Oberseite der Kernplatte, den Wulst und den Rand aufgeleimten Dekorplatte und gegebenenfalls mit einer auf die Unterseite der Kernplatte aufgeleimten Schutzfolie, wobei zwischen der Kernplatte und dem Randteil eine keilförmige, mit einer dauerhaften Füllung ausgefüllte Nut vorgesehen ist, die sich im wesentlichen schräg von unten bis in den Bereich der Dekorplatte erstreckt und so angeordnet und ausgebildet ist, daß der Randteil durch die Keilform der Nut zu dem Wulst angehoben ist, dadurch gekennzeichnet, daß die Nut (7) im unteren Bereich vom Rand der Kernplatte (2), vorzugsweise von der unteren Hälfte des Randes der Kernplatte (2) ausgeht und daß die Füllung (9) hier von der auf den Rand der Kernplatte (2) aufgeleimten Dekorplatte (4) überdeckt ist.

2. Verbundplatte nach Anspruch 1, dadurch gekennzeichnet, daß die Nut (7) im Bereich der Oberseite (3) der Kernplatte (2) einen an der Oberseite (3) der Kernplatte (2) offenen Abschnitt (13) aufweist, der vorzugsweise im wesentlichen senkrecht zur Oberseite (3) der Kernplatte (2) verläuft.

3. Verbundplatte nach Anspruch 1 oder 2, dadurch gekennzeichnet, daß die Füllung (9) zu einem Teil aus einem plastischen, aushärtbaren Füllmaterial (11) und zu einem anderen Teil aus einem festen Füllstück (12) besteht.

4. Verfahren zur Herstellung einer Verbundplatte nach einem der vorhergehenden Ansprüche, bei dem die Kernplatte zugeschnitten und der Übergangsbereich zumindest eines Randes der Kernplatte zu ihrer Oberseite abgerundet und der Rand von der Oberseite weg nach innen abgeschrägt wird, die Dekorplatte auf die Oberseite der Kernplatte aufgeleimt wird, nahe dem abgerundeten und abgeschrägten Rand die Nut in die Kernplatte bis in den Bereich der Dekorplatte eingeschnitten und dadurch der Randteil der Kernplatte ausgebildet wird, der Randteil von der Kernplatte unter keilförmigem Aufweiten der Nut zu dem Wulst weggebogen wird und die aufgeweitete Nut mit der dauerhaften Füllung ausgefüllt wird, dadurch gekennzeichnet, daß das Einschneiden des wesentlichen Teils der Nut vom Rand, vorzugsweise von der unteren Hälfte des Randes aus erfolgt und daß das Verleimen der Dekorplatte über den Wulst und den Rand erst nach dem Ausfüllen der Nut vorgenommen wird.

5. Verfahren nach Anspruch 4, dadurch gekennzeichnet, daß das Abrunden und Abschrägen des Randes nur über etwa 60 % bis 95 %, insbesondere über 80 %, der Dicke der Kernplatte vorgenommen wird, so daß im Bereich der Unterseite der Kernplatte eine über den bearbeiteten Teil des Randes vorspringende Leiste verbleibt und daß der Ausgangsbereich für das Einschneiden der Nut über der Leiste vorgesehen wird.

6. Verfahren zur Herstellung einer Verbundplatte, bei dem zur Füllung der Nut ein festes, vorzugsweise aus dem Material der Kernplatte bestehendes Füllstück verwendet wird, nach Anspruch 4 oder 5, dadurch gekennzeichnet, daß das Füllstück nach dem dauerhaften Einsetzen in die Nut zunächst aus der Nut herausragt und daß vor dem Aufleimen der Dekorplatte der überstehende Teil des Füllstückes, ggf. gemeinsam mit dem noch überstehenden Teil der vorspringenden Leiste, an die Kontur des Randteiles, vorzugsweise durch Beifräsen, angepaßt wird.

7. Verfahren nach einem der Ansprüche 4 bis 6 zum Herstellen einer Verbundplatte nach Anspruch 2, dadurch gekennzeichnet, daß das Einschneiden des vorzugsweise im wesentlichen senkrecht zur Oberseite der Kernplatte verlaufenden Abschnitts der Nut von der Oberseite der Kernplatte aus vor dem Aufleimen der Dekorplatte vorgenommen wird.

8. Verfahren nach einem der Ansprüche 4 bis 7, dadurch gekennzeichnet, daß die Schutzfolie auf die Unterseite der Kernplatte vollflächig und vorzugsweise etwa gleichzeitig mit dem Aufleimen der Dekorplatte auf die Oberseite der Kernplatte aufgeleimt wird.

**Claims**

1. A composite panel, with a core panel having a rounded bulge extending from the upper surface of the core panel to its edge, which is formed by an edge piece, with a decorative panel glued to the upper surface of the core panel, the bulge and the edge, and if required with a protective sheet glued to the lower surface of the core panel, in which a wedge-shaped slot, provided between the core panel and the edge piece, is filled with a permanent filling, extends basically obliquely from below as far as the neighbourhood of the decorative panel, and is so located and formed that the edge piece is lifted by the wedge-shape of the slot to form the bulge, characterized in that the slot (7) commences from from the lower portion of the edge of the core panel (2), preferably from the lower half of the edge of the core panel (2), and that the filling (8) is here covered over by the decorative panel (4) glued to the edge of the core panel (2).

2. A composite panel according to Claim 1, characterized that the slot (7) in the area of the upper surface (3) of the core panel (2) possesses a portion (13) that is open at the upper surface (3) of the core panel (2) and that preferably extends essentially perpendicularly to the upper surface (3) of the core panel (2).

3. A composite panel according to Claim 1 or 2, characterized in that the filling (8) consists in one part of a hardenable plastics filling material (11) and in another part of a rigid filling piece (12):

4. A process for the manufacture of a composite panel according to one of the previous Claims, in which the core panel is cut to size and the transitional region of at least one edge of the core panel is rounded off at its upper surface and is inclined inwards away from the upper surface, the decorative panel is glued to the upper surface of the core panel, the slot is cut in the core panel near to the rounded-off and inclined edge as far as the area of the decorative panel and thereby the edge piece of the core panel is formed, the edge piece is bent away from the core panel to form the bulge with wedge-shaped widening of the slot and the widened slot is filled by the permanent filling, characterized in that cutting of the principal part of the slot takes place from the edge, preferably from the lower half of the edge, and that gluing of the decorative panel over the bulge and the edge is only undertaken after the slot has been filled.

5. A process according to Claim 4, characterized in that the rounding-off and inclination of the edge is only undertaken over about 60 % to 95 %, preferably over 80 % of the thickness of the core panel, so that a ridge remains next to the lower surface of the core panel, projecting beyond the machined portion of the edge and that the starting area for cutting the slot is provided above the ridge.

6. A process for the manufacture of a composite panel, in which a rigid filling piece, preferably consisting of the material of the core panel, is used to fill the slot, according to Claim 4 or 5, characterized in that after permanent insertion into the slot the filling piece initially projects out of the slot, and that before the gluing of the decorative panel the projecting portion of the filling piece, together with the still-projecting portion of the ridge if required, is matched to the contour of the edge piece, preferably by edge milling.

7. A process according to one of Claims 4 to 8 for the manufacture of a composite panel according to Claim 2, characterized in that cutting of the portion of the slot that preferably runs essentially perpendicularly to the upper surface of the core panel is undertaken from the upper surface of the core panel prior to the gluing of the decorative panel.

8. A process according to one of Claims 4 to 7, characterized in that the full surface of the protective sheet is glued to the lower surface of the core panel, preferably at about the same time as the decorative panel is glued to the upper surface of the core panel.

## Revendications

1. Panneau composite comportant une plaque centrale pourvue d'un bourrelet arrondi venant se confondre de la face supérieure de la plaque centrale jusqu'au bord et formé par une partie marginale, une plaque décorative collée sur la face supérieure de la plaque centrale, le bourrelet et le bord, ainsi qu'éventuellement une feuille protectrice collée sur la face inférieure de la plaque centrale tandis que, entre cette dernière et la partie marginale, est prévue une rainure cunéiforme comblée d'un remplissage permanent, qui s'étend essentiellement en oblique de bas jusque dans la zone de la plaque décorative, tandis qu'elle est disposée et réalisée de telle sorte que la partie marginale soit soulevée par la configuration cunéiforme de cette rainure jusqu'au bourrelet, caractérisé en ce que, dans sa zone inférieure, la rainure (7) part du bord de la plaque centrale (2), de préférence, de la moitié inférieure du bord de cette plaque centrale (2), tandis que, à cet endroit, le remplissage (9) est recouvert par la plaque décorative (4) collée sur le bord de la plaque centrale (2).

2. Panneau composite selon la revendication 1, caractérisé en ce que, dans la zone de la face supérieure (3) de la plaque centrale (2), la rainure (7) comporte un tronçon (13) ouvert sur la face supérieure (3) de cette plaque centrale (2) et s'étendant, de préférence, essentiellement perpendiculairement à cette face supérieure (3) de cette plaque centrale (2).

3. Panneau composite selon la revendication 1 ou 2, caractérisé en ce que le remplissage (9) est constitué, pour une part, d'une matière de remplissage plastique durcissable (11) et, pour une autre part, d'une pièce de remplissage solide (12).

4. Procédé de fabrication d'un panneau composite selon une des revendications précédentes, procédé dans lequel la plaque centrale est coupée à dimension, la zone de transition d'au moins un bord de cette plaque centrale est arrondie en direction de sa face supérieure et le bord est chanfreiné vers l'intérieur à l'écart de cette face supérieure, la plaque décorative est collée sur la face supérieure de la plaque centrale et, à proximité du bord arrondi et chanfreiné, la rainure est entaillée dans la plaque centrale jusque dans la zone de la plaque décorative, formant ainsi la partie marginale de la plaque centrale, la partie marginale est pliée à l'écart de la plaque centrale avec un élargissement cunéiforme de la rainure en direction du bourrelet et la rainure élargie est comblée par le remplissage permanent, caractérisé en ce que l'entaillage de la partie principale de la rainure a lieu à partir du bord, de préférence, à partir de la moitié inférieure du bord, tandis que le collage de la plaque décorative sur le bourrelet et le bord n'est effectué qu'après avoir comblé la rainure.

5. Procédé selon la revendication 4, caractérisé en ce que l'arrondi et le chanfrein du bord ne sont formés que sur environ 60 à 95 %, en particulier, 80 % de l'épaisseur de la plaque centrale si bien que, dans la zone de la face inférieure de cette dernière, il subsiste une languette ressortant en saillie au-delà de la partie usinée du bord et que la zone de départ pour l'entaillage de la rainure est prévue au-dessus de cette languette.

6. Procédé selon la revendication 4 ou 5 pour la fabrication d'un panneau composite, procédé dans lequel, pour combler la rainure, on utilise une pièce de remplissage solide constituée, de préférence, de la matière de la plaque centrale, caractérisé en ce que, après son introduction permanente dans la rainure, la pièce de remplissage ressort tout d'abord de celle-ci et en ce que, avant de coller la plaque décorative, on adapte la partie en saillie de cette pièce de remplissage, éventuellement conjointement avec la partie encore en saillie de la languette, au contour de la partie marginale, de préférence, par fraisage.

7. Procédé selon une des revendications 4 à 6 pour la fabrication d'un panneau composite selon la revendication 2, caractérisé en ce que l'entaillage du tronçon de la rainure, qui, de préférence, s'étend essentiellement perpendiculairement à la face supérieure de la plaque centrale, est effectué à partir de la face supérieure de cette dernière avant de coller la plaque décorative.

8. Procédé selon une des revendications 4 à 7, caractérisé en ce que la feuille protectrice est collée sur toute la surface de la face inférieure de la plaque centrale et, de préférence, à peu près simultanément avec le collage de la plaque décorative sur la face supérieure de cette plaque centrale.

Fig.1

Fig.2

Fig.3

Fig.4

Fig.5